# FASCICULE DE BREVET EUROPEEN

(11) **EP 0 405 038 B1**
(45) Date de publication et mention de la délivrance du brevet: **18.05.1994**
(21) Numéro de dépôt: 89401880.3
(22) Date de dépôt: 30.06.1989
(51) Int. Cl.: C10G 35/12, C10G 35/04, B01J 8/12, B01J 8/02

(54) **Procédé de reformage catalytique avec circulation d'un fluide caloporteur dans une pluralité d'espaces internes creux**
Katalytisches Reformierungsverfahren mit Zirkulation von Wärmeübertragungsmittel in ein Vielfaches von inneren Aushöhlungen
Catalytic reforming process using circulation of a heat exchange fluid in a plurality of hollow internal spaces

(43) Date de publication de la demande: 02.01.1991
(73) Titulaire: INSTITUT FRANCAIS DU PETROLE, 92502 Rueil-Malmaison (FR)
(72) Inventeur: Dang Vu, Quang, F-92200 Neuilly (FR); Bournonville, Jean-Paul, F-95000 Cergy Pontoise (FR); Le Page, Jean-François, F-92500 Rueil Malmaison (FR)

(56) Documents cités:
- EP-A- 0 269 171
- EP-A- 0 322 292
- EP-A- 0 324 670
- FR-A- 2 462 471
- GB-A- 2 130 498
- US-A- 3 909 208

## Description

L'invention concerne un procédé de réformage des essences sous basse pression, en présence d'au moins un catalyseur, dans une zone réactionnelle dont au moins une partie est contrôlée thermiquement par un dispositif d'échange thermique à base de plaques creuses disposé en son sein.

Il est connu d'améliorer la qualité des essences, et notamment leur indice d'octane, par un réformage aux environs de 500 °C, en présence d'hydrogène, au sein de plusieurs lits catalytiques solides à base de métaux précieux tels que le platine, activés par divers additifs tels que le rhénium et l'iridium par exemple (brevets US-A-4 588 495, FR-B-2 593 824, FR-B-2 597 496, FR-B-2 600 668).

La réaction de réformage des essences est une réaction globalement endothermique et on assiste habituellement à une chute de la température réactionnelle au fur et à mesure de la progression des transformations.

Le procédé de réformage traditionnel des essences comporte trois, et généralement quatre, réacteurs adiabatiques, disposés en série et reliés entre eux par deux, et généralement trois, fours de réchauffage, dont le rôle est de réchauffer les réactifs et de ramener ainsi leur température dans la fourchette souhaitée de température réactionnelle.

Les demandes de brevet EP-A-322292 et EP-A-324670 décrivent un réacteur de forme sensiblement cylindrique comportant un échangeur de chaleur constitué par des plaques creuses agencées autour de l'axe du réacteur, et reliées à un distributeur central de fluide caloporteur circulant en écoulement descendant dans l'échangeur. Entre les plaques se trouve le catalyseur et la charge entrant par le haut du réacteur et soutiré en partie basse.

L'application des normes antipollution conduit à une diminution de la concentration en plomb dans les essences et aboutira à terme à la suppression des additifs organo-plombiques dans les carburants automobiles pour moteurs à allumage commandé. Cette réglementation impose aux raffineurs une augmentation de la sévérité des conditions opératoires de fonctionnement des unités de réformage afin de satisfaire aux critères de qualité requis pour un fonctionnement satisfaisant des moteurs automobiles : ainsi, les raffineurs sont amenés à réduire de plus en plus la pression opératoire de ces unités de réformage. En effet, si on augmente la sévérité des conditions de fonctionnement, en particulier l'indice d'octane des produits de réformage, le rendement chute et le seul moyen de compenser cette baisse de rendement est de fonctionner à une pression plus basse.

Mais ce fonctionnement à basse pression coûte cher et R.G. Mc Clung et al. ont montré que la limitation est due aux pertes de charge à travers les équipements, l'optimum de ces pertes étant situé à environ 0,35 - 0,5 MPa (Hydrocarbon Processing, septembre 83, pages 80-84).

Il paraît ainsi difficile de pouvoir opérer des réformages sous des pressions inférieures à 0,7 MPa, et même inférieures à 1 MPa.

Or, la présente invention est en particulier caractérisée en ce que le réformage des essences est opéré sous une pression comprise entre 0,1 et 0,9 MPa, en présence d'au moins un catalyseur, dans une zone réactionnelle dont au moins une partie est sous contrôle thermique au moyen d'un dispositif de transfert de chaleur à plaques creuses (ou espaces internes creux) disposé en son sein.

On fait circuler à l'intérieur de ce dispositif de transfert de chaleur un fluide destiné au transfert thermique (et supportant la haute température) et communément désigné sous le nom de fluide caloporteur (ou fluide de thermorégulation).

A titre indicatif, une des charges d'hydrocarbures à traiter peut contenir généralement, en volume, 35 à 80 % d'hydrocarbures paraffiniques, 14 à 51 % d'hydrocarbures naphténiques et 2 à 18 % d'hydrocarbures aromatiques. Cette charge est, par exemple, un naphta distillant entre environ 55 °C et environ 225 °C.

La zone réactionnelle est formée d'un réacteur radial (les réactifs traversant alors le lit catalytique sensiblement perpendiculairement à l'axe du réacteur, par exemple de manière centrifuge), de forme sensiblement cylindrique et de section sensiblement circulaire.

Le lit catalytique solide dudit réacteur, mobile ou fixe, de préférence mobile, est formé par une couronne coaxiale avec l'enveloppe sensiblement cylindrique du réacteur, lit catalytique au sein duquel sont disposés les espaces internes creux d'un dispositif de transfert de chaleur. Le lit catalytique se présente donc sous la forme d'un anneau (dit "anneau catalytique") délimité par deux parois cylindriques coaxiales (une paroi d'entrée P et une paroi de sortie P′ de la charge) perméables aux fluides (gaz, liquides) et imperméables aux particules catalytiques solides (voir pour plus ample information US-A-3 909 208).

Les plaques creuses utilisées dans la présente invention travaillent très peu à la contrainte, ce qui permet de les évider totalement et de laisser le fluide caloporteur assurer l'échange thermique à travers la totalité de la surface disponible. De plus, les montages et les connexions sont suffisamment simples pour être réalisés facilement dans l'espace restreint offert par le réacteur.

Lesdites plaques sont avantageusement placées selon les rayons de la section d'un anneau idéal confondu avec ou contenu dans l'anneau catalytique défini précédemment, le volume catalytique ainsi réchauffé représentant généralement 20 à 100 %, de préférence 50 à 100 % du volume (annulaire) catalytique global.

Selon un mode de réalisation préférentiel de l'invention, la zone réactionnelle est composée de deux réacteurs radiaux en série (deux zones de réaction radiales en série), de forme sensiblement cylindrique et de section sensiblement circulaire.

Un dispositif de transfert thermique à base de plaques creuses et un lit catalytique solide (fixe ou mobile, de préférence mobile) sont disposés à l'intérieur du premier réacteur, qui est par exemple parcouru de façon centrifuge par les réactifs (d'un conduit central (défini par la paroi d'entrée P de la charge mentionnée ci-dessus et fermé à une extrêmité) vers l'espace annulaire extérieur).

Le deuxième réacteur radial est à lit catalytique solide mobile pour le renouvellement continu du catalyseur. Il est par exemple parcouru de façon centripète par les réactifs (depuis l'espace annulaire extérieur vers le conduit central) et est éventuellement équipé d'un dispositif de transfert thermique à base de plaques creuses.

Chaque dispositif de transfert thermique est disposé de la même manière que celle décrite précédemment.

De même, le volume catalytique réchauffé total représente en général 20 à 100 %, de préférence 50 à 100 % du volume catalytique total.

Dans les procédés selon l'invention, le cheminement du fluide caloporteur dans le dispositif de transfert thermique (ou zone d'échange thermique) permet de réchauffer le sein du lit catalytique dans lequel ledit dispositif est plongé.

Le système de thermorégulation, c'est à dire le circuit du fluide caloporteur, n'est pas ouvert sur le système réactionnel ; c'est un circuit scellé, statique, et fermé vers l'extérieur, la circulation dudit fluide étant en général assurée par une pompe, par exemple électromagnétique, agissant à travers les parois étanches dudit circuit, sans contact et sans liaison mécanique avec le fluide caloporteur (ainsi, le corps de cette pompe est complètement fermé vers l'extérieur).

Le fluide caloporteur peut être un mélange de sels fondus, par exemple de nitrates et/ou de carbonates de préférence alcalins.

Il peut contenir au moins un métal fondu et/ou au moins un composé fondu d'au moins un métal, métal et composé qui ont avantageusement un point de fusion inférieur à 500 °C, de préférence inférieur à 400 °C, et dont la résistivité à 20 °C est utilement inférieure à 90 µ Ω . cm (0,9.10⁻⁶Ω.m). On peut par exemple employer dans le fluide caloporteur, à l'état isolé ou dans un composé, au moins un métal choisi dans le groupe formé par le mercure, le sodium, l'étain, le plomb. On y ajoute éventuellement au moins un composé abaisseur de température de fusion, tel que l'antimoine, le bismuth, le potassium.

Une composition préférée du fluide caloporteur est un mélange fondu de sodium et potassium contenant 20 à 60 % en poids de potassium, et dont le point de fusion est aux alentours de 18°C.

Une autre composition avantageuse est un eutectique de plomb et de bismuth, de point de fusion égal à 125 °C environ.

On peut utiliser tout catalyseur de reformage connu de l'homme de l'art.

On emploiera par exemple des catalyseurs supportés à base d'au moins un métal noble du groupe VIII de la classification périodique des éléments, généralement le platine, de préférence dopés par au moins un promoteur tel que l'iridium, le germanium (US-A-2 848 377), le rhénium (US-A-3 415 737), l'étain (US-A-3 700 588). Généralement, on peut incorporer aux catalyseurs un halogène tel que le chlore ou le fluor (FR-B-2 600 668).

Les supports des catalyseurs sont usuellement choisis parmi les oxydes des métaux des groupes II, III et/ou IV de la classification périodique des éléments, tels que, par exemple, les oxydes de magnésium, d'aluminium, de titane, de zirconium, de thorium ou de silicium, pris seuls ou en mélange entre eux ou avec des oxydes d'autres éléments de la classification périodique, tels que par exemple le bore. On peut utiliser aussi du charbon. On peut également utiliser des zéolites ou tamis moléculaires de type X ou Y, ou de type mordénite ou faujasite ou de type ZSM-5, ZSM-4, ZSM-8 L, etc... ainsi que des mélanges d'oxydes de métaux des groupes II, III et/ou IV avec du matériel zéolitique.

D'une manière préférée, on emploie un support formé principalement d'alumine, c'est-à-dire dont l'alumine représente au moins 50 % en poids par rapport au poids total du support et de préférence au moins 80 % en poids, et d'une manière la plus préférée, on emploie de l'alumine seule.

Les diverses caractéristiques des procédés selon l'invention seront mieux comprises à la lumière de la description détaillée qui suit.

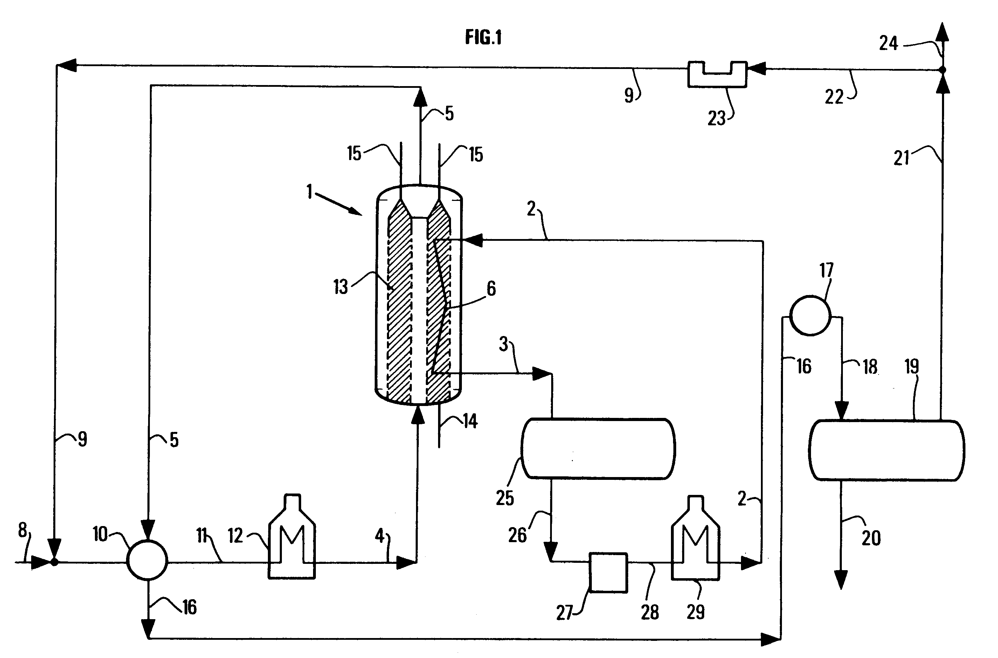

La figure 1, donnée à titre d'exemple, illustre l'un des procédés de l'invention dans lequel la zone réactionnelle est formée d'un réacteur radial (1) à lit catalytique mobile contenant un dispositif de transfert thermique à plaques creuses.

La charge d'hydrocarbures à traiter, de préférence désulfurée, par exemple du naphta désulfuré provenant de la distillation atmosphérique d'un brut de pétrole, est envoyée dans le conduit 8 de l'unité de reformage où elle se mélange avec de l'hydrogène amené par le conduit 9 ; le rapport molaire hydrogène sur charge d'hydrocarbures à traiter (H2/HC) est habituellement compris entre 1,5 et 8, de préférence entre 2,5 et 5,5.

Le mélange ainsi formé est ensuite de préférence indirectement préchauffé par de l'effluent réactionnel chaud (provenant de la conduite 5) à travers l'échangeur de chaleur 10 ; puis il passe par le conduit 11 dans le four de préchauffe 12 qui amène sa température en général aux environs de 500 °C. Les réactifs, conditionnés par 12, rejoignent par le conduit 4 la zone de réaction 1 formée d'un réacteur radial dont le lit catalytique annulaire mobile 13 contient le dispositif d'échange thermique à plaques creuses (ou zone d'échange thermique à espaces internes creux).

La charge d'hydrocarbures se réforme à travers le lit catalytique 13, passant par exemple, dans le cas d'un naphta, d'un nombre d'octane recherché (NOR) d'environ 55-60 à un nombre d'octane recherché (NOR) d'environ 100-105.

Pour éviter une trop grande accumulation de coke, le catalyseur du lit 13 peut être constamment renouvelé, du catalyseur usé pouvant être soutiré en continu par le conduit 14 situé vers le bas du lit 13 et continuellement remplacé par du catalyseur frais introduit par les conduits 15 situés vers le haut du lit 13.

L'effluent réactionnel, dont la température n'a pratiquement pas varié (du fait de la présence du dispositif d'échange thermique à l'intérieur duquel circule le fluide caloporteur) sort de la zone de réaction 1 par le conduit 5 pour venir préchauffer le mélange (hydrocarbures + hydrogène) à travers l'échangeur 10.

Puis l'effluent réactionnel quitte 10 par le conduit 16 qui l'amène jusqu'à un condenseur 17, et arrive ensuite, par la conduite 18, dans un ballon séparateur 19 qui permet de séparer le réformat d'un mélange gazeux riche en hydrogène (gaz de recyclage).

De 19, le réformat est envoyé, à travers le conduit 20, vers une zone de stabilisation (non représentée sur les figures) et ledit mélange gazeux est évacué par la conduite 21. La majeure partie de ce mélange gazeux est aspirée par un compresseur de recyclage 23 au travers du conduit 22 et est ainsi recyclée par la conduite 9. L'excédent de mélange gazeux non recyclé par le compresseur 23 est purgé à travers le conduit 24 vers des utilisations extérieures.

Au niveau du système de thermorégulation, le fluide caloporteur, par exemple un mélange fondu de plomb et bismuth, dont la température est habituellement comprise entre 400 et 600 °C, sort du dispositif d'échange thermique 6 par le conduit 3 avant d'entrer dans un ballon tampon 25 équipé d'un dispositif de balayage au gaz destiné à régler la pression du système caloporteur en fonction de celle du système réactionnel. Le fluide caloporteur est ensuite évacué dudit ballon par le conduit 26 et est repris par une pompe électromagnétique (de recirculation) 27, dont le corps est complètement fermé vers l'extérieur, qui le refoule dans la conduite 28 pour être réchauffé dans un four 29. Le fluide caloporteur, reconditionné par 29, passe dans le conduit 2 qui l'amène à nouveau dans le dispositif d'échange thermique 6 contenu dans le lit catalytique 13.

Les conduits 2, 3, 26 et 28 sont éventuellement dotés d'un manchon de fil électrique chauffant (par exemple noyé dans du ciment thermiquement conducteur), comme c'est le cas lorsque le fluide caloporteur est un mélange de plomb et bismuth qui est encore solide à 125 °C environ.

Ainsi, l'objet de l'invention est un procédé de réformage catalytique dans lequel on fait circuler une charge d'hydrocarbures, dans des conditions de réformage en présence d'hydrogène, à travers une zone de réaction définie par une enceinte de forme sensiblement cylindrique, ladite zone renfermant un lit de catalyseur qui a la forme d'un anneau délimité par deux parois cylindriques coaxiales, dans lequel est plongée entièrement une pluralité d'espaces internes creux (délimités par des parois) dans lesquels circule un fluide caloporteur, la charge traversant ledit lit sensiblement perpendiculairement à l'axe longitudinal de la zone de réaction, la pression dans ladite zone étant comprise entre 0,1 et 0,9 MPa. Le lit de catalyseur est fixe ou mobile, de préférence mobile.

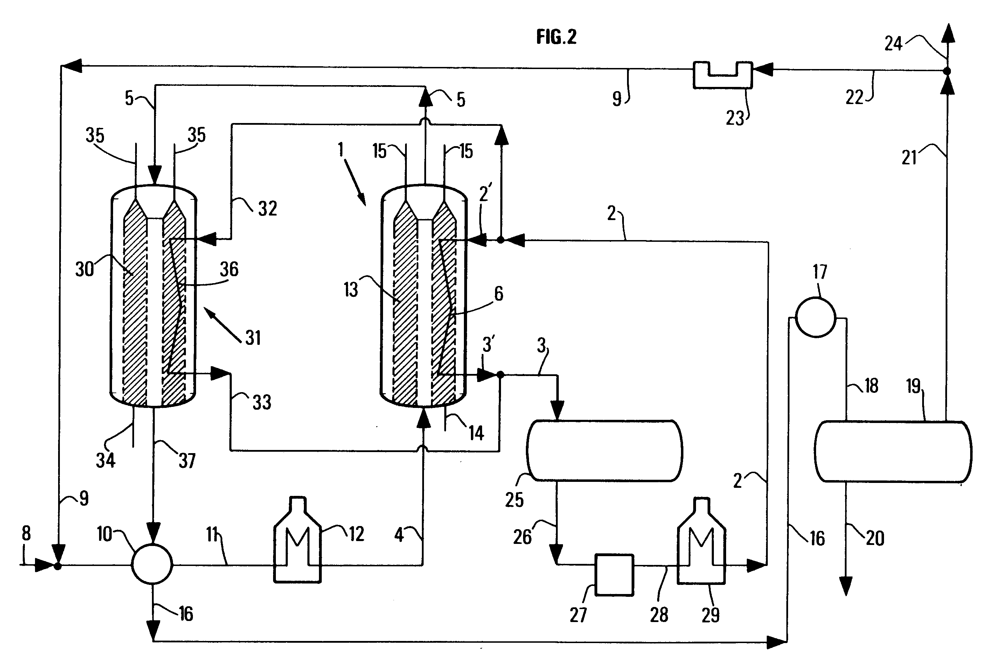

La figure 2, donnée à titre d'exemple, illustre un autre procédé de l'invention dans lequel la zone réactionnelle est double, c'est à dire composée de deux réacteurs radiaux (1 et 31) disposés en série :
- le premier réacteur radial (1) contient un dispositif de transfert thermique à base de plaques creuses et, selon une variante de l'invention, un lit catalytique mobile ;
- le deuxième réacteur radial (31) renferme un lit catalytique mobile et, optionnellement, un dispositif de transfert thermique à base de plaques creuses (identique ou non à celui contenu dans le premier réacteur (1)).

Par rapport au procédé illustré précédemment par la figure 1, on a intercalé, entre le réacteur 1 et l'échangeur de chaleur 10, un réacteur 31 contenant un lit catalytique 30 mobile (équipé de conduits d'introduction 35 et de soutirage 34 du catalyseur) et un dispositif de transfert thermique 36 à base de plaques creuses.

La marche de l'unité de la figure 2 reste sensiblement la même que celle de la figure 1 : l'effluent réactionnel sortant de la zone de réaction 1, par le conduit 5, rejoint ici la zone de réaction 31 dont le lit catalytique annulaire mobile 30 contient un dispositif d'échange thermique à plaques creuses (ou zone d'échange thermique à espaces internes creux) ; il va alors subir une réformation à travers ledit lit 30. L'effluent réactionnel final, dont la température n'a pratiquement pas varié (du fait de la présence du dispositif d'échange thermique) sort de la zone de réaction 31 par le conduit 37 pour venir préchauffer indirectement le mélange (hydrocarbures + hydrogène) à travers l'échangeur 10.

Le système de thermorégulation de la seconde zone de réaction 31 est de préférence relié à celui de la première zone de réaction 1 : au niveau de la conduite 2, le fluide caloporteur est divisé en deux parties, l'une se dirigeant, par le conduit 2′, vers le dispositif d'échange thermique 6 de la zone de réaction 1, l'autre circulant, par le conduit 32, vers le dispositif d'échange thermique 36 de la zone de réaction 31. Les fluides caloporteurs sortant de 6 et 36, respectivement par les conduits 3′ et 33, sont regroupés dans le conduit 3. Les conduits 2, 2′, 3, 3′, 26, 28, 32 et 33 sont éventuellement dotés d'un manchon de fil électrique chauffant.

Dans les différents procédés selon l'invention, la pression du système de thermorégulation (ou système caloporteur) est généralement réglée, à l'aide du ballon tampon 25 par exemple, de manière à être légèrement plus basse de 0,005 à 0,5 MPa, de préférence de 0,01 à 0,2 MPa à la pression de chaque zone de réaction.

Grâce à la suppression des fours de réchauffage et des étages de réacteur, la perte de charge à travers l'ensemble du système réactionnel ne dépasse pas en général 0,1 MPa, et la pression à l'entrée de l'unité peut être facilement réglée aux alentours de 0,1 à 2,0 MPa.

Le débit massique horaire de charge d'hydrocarbures à traiter est habituellement égal à 1 à 10 fois, de préférence 2 à 5 fois, la masse totale de catalyseur présent dans l'ensemble du système réactionnel.

L'invention est donc également relative à un procédé de réformage catalytique dans lequel on fait circuler une charge d'hydrocarbures, dans des conditions de réformage en présence d'hydrogène, successivement à travers deux zones de réaction définies chacune par une enceinte de forme sensiblement cylindrique, la première zone de réaction traversée par la charge renfermant un lit de catalyseur qui a la forme d'un anneau délimité par deux parois cylindriques coaxiales, dans lequel est plongée entièrement une pluralité d'espaces internes creux (délimités par des parois) dans lesquels circule un fluide caloporteur, la charge traversant le dit lit sensiblement perpendiculairement à l'axe longitudinal de cette première zone de réaction, la seconde zone de réaction renfermant un lit mobile de catalyseur (identique ou non à celui du lit de la première zone de réaction) qui a la forme d'un anneau délimité par deux parois cylindriques coaxiales, les réactifs traversant ledit lit sensiblement perpendiculairement à l'axe longitudinal de cette seconde zone de réaction. Dans les deux zones de réaction, la pression est comprise entre 0,1 et 0,9 MPa.

Le lit catalytique contenu dans la première zone de réaction est fixe ou mobile, de préférence mobile.

Une pluralité d'espaces internes creux dans lesquels circule un fluide caloporteur peut être, par exemple, entièrement plongée dans le lit catalytique de la seconde zone de réaction.

L'invention concerne également la mise en oeuvre desdits procédés avec l'utilisation d'espaces internes creux de conceptions particulières pour la circulation du fluide caloporteur.

Dans la description qui suit, on ne fait référence, pour simplifier, qu'au réacteur ou zone de réaction 1, mais ladite description s'applique également au réacteur (zone de réaction) 31 dans le cas où il est muni d'un dispositif ou d'une zone d'échange thermique à base de plaques creuses (ou d'espaces internes creux).

Les figures 3 et 4 représentent chacune une conception dans laquelle les espaces internes creux (ou plaques creuses) ont été représentés avec des faces planes (ce qui correspond à des formes de réalisation préférentielle de l'invention) et dans laquelle l'anneau catalytique n'a pas été mentionné afin de ne pas surcharger les figures.

Les figures 3A, 3B et 4A, 4B permettent de mieux visualiser la situation de l'anneau catalytique (13 ou 30) (la paroi P˝ est imperméable aux fluides et aux particules catalytiques solides).

Les figures 5A, 5B, 5C et 5D représentent des plaques selon un perfectionnement de l'invention.

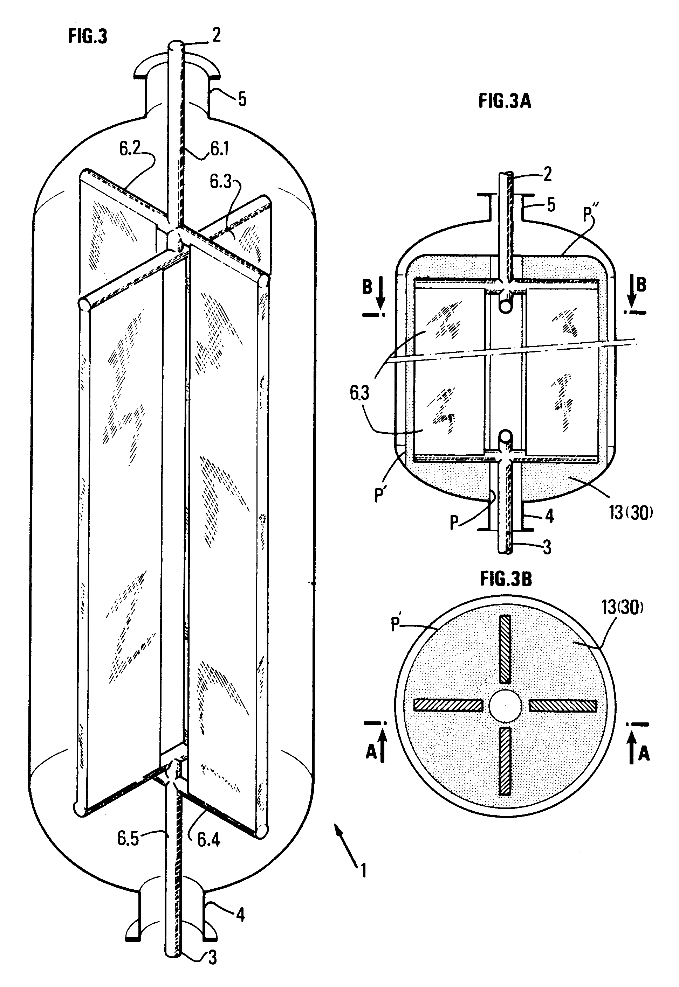

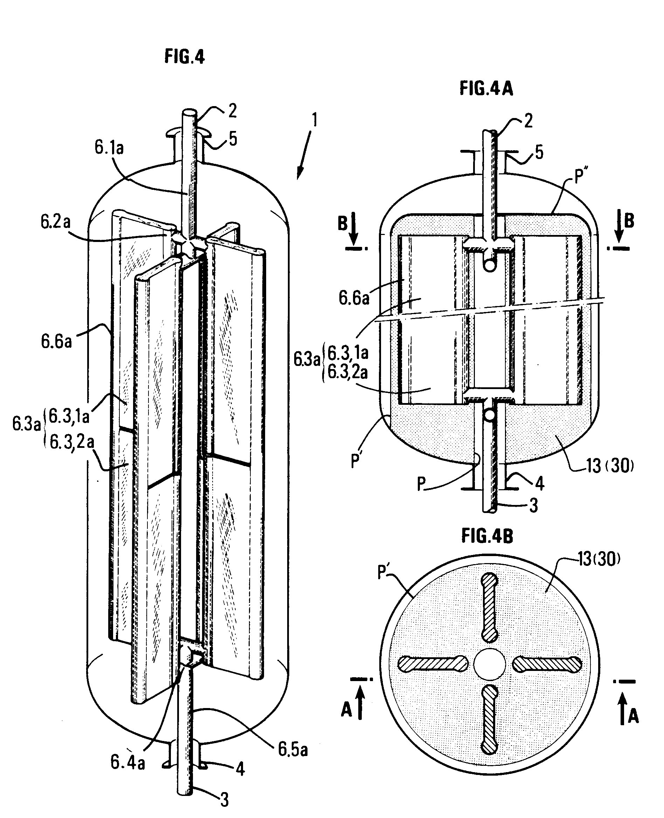

Dans les deux types de circulation du fluide caloporteur (figures 3, 3A, 3B et 4, 4A, 4B), on utilise une zone de réaction ou enceinte (1), de forme sensiblement cyclindrique et dont la section a une forme sensiblement circulaire, comportant au moins une conduite (2) pour l'introduction d'un fluide caloporteur, au moins une conduite (3) pour le soutirage dudit fluide, au moins une conduite (4) pour l'introduction d'une charge dans l'enceinte et au moins une conduite (5) pour le soutirage de l'effluent réactionnel de ladite enceinte.

Le dispositif d'échange thermique employé dans le premier type de circulation dit fluide caloporteur renferme (voir figures 3, 3A, 3B) :
a) au moins un collecteur distributeur central (6.1), par exemple vertical, dont l'axe correspond généralement à l'axe de l'enceinte, qui est situé dans la partie supérieure de l'enceinte et est connecté à la conduite 2,
b) une pluralité de collecteurs distributeurs (6.2), perpendiculaires à l'axe de l'enceinte, ces collecteurs étant connectés individuellement au collecteur distributeur central (6.1),
c) au moins un collecteur receveur central (6.5), par exemple vertical, dont l'axe correspond en général à l'axe de l'enceinte, qui est situé dans la partie inférieure de l'enceinte et est connecté à la conduite 3,
d) une pluralité de collecteurs receveurs (6.4), perpendiculaires à l'axe de l'enceinte, ces collecteurs étant connectés individuellement au collecteur receveur central (6.5),
e) une pluralité de plaques creuses, continues et allongées (6.3), destinées à la circulation du fluide caloporteur, chaque plaque comportant une ouverture sur un collecteur distributeur (6.2) et une ouverture sur un collecteur receveur (6.4).

Le collecteur distributeur central (6.1) peut éventuellement se terminer par un anneau circulaire sur lequel viennent se connecter les différents collecteurs distributeurs (6.2). De même, les différents collecteurs receveurs (6.4) peuvent être connectés à un anneau circulaire par lequel se terminerait le collecteur receveur central (6.5).

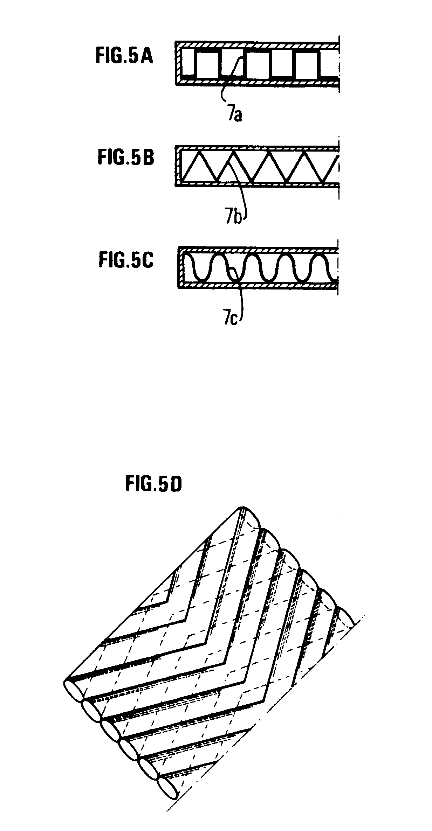

Les faces des plaques creuses peuvent être constituées par des tôles ondulées dont les ondulations ont au choix l'une des formes suivantes : carrée, rectangulaire, triangulaire, sinusoïdale et en chevrons (voir figure 5 D), le but étant de créer une forte turbulence sur l'écoulement du fluide caloporteur.

Il convient que lesdites plaques creuses soient sensiblement parallélépipèdiques (6.3), chaque plaque comportant deux faces larges parallèles délimitant un plan disposé radialement par rapport à l'axe de l'enceinte et quatre faces minces, deux d'entre elles étant parallèles à l'axe de l'enceinte, les deux autres étant perpendiculaires à cet axe, chaque plaque étant connectée, par sa face mince supérieure perpendiculaire à l'axe de l'enceinte, à un collecteur distributeur (6.2), et, par sa face mince inférieure perpendiculaire à l'axe de l'enceinte, à un collecteur receveur (6.4). Ces quatres faces minces peuvent éventuellement être non planes, mais par exemple semi-cylindriques.

Ces plaques creuses ou espaces internes creux sont contenus entièrement dans l'anneau catalytique (voir précédemment).

Dans les figures 3, 3A, 3B données à titre d'exemples, on décrira le trajet des réactifs dans la zone de réaction (1) et du fluide caloporteur à travers des plaques creuses (ou espaces internes creux) sensiblement parallélépipèdiques. Les réactifs, après avoir pénétré dans la zone de réaction (1) par la conduite 4 traversent l'anneau catalytique sensiblement perpendiculairement à l'axe de ladite zone de réaction (sur les figures 3, 3A, 38 et 4, 4A, 4B cette traversée est centrifuge, c'est à dire effectuée de la partie centrale dudit anneau, partie libre de catalyseur, vers l'espace annulaire (sans catalyseur) extérieur audit anneau, mais elle peut être également centripète). Ils sortent de ladite zone par la conduite 5. Dans cette invention perfectionnée :
- on envoie le fluide caloporteur dans une zone de distribution centrale (6.1),
- on répartit ledit fluide en provenance de la zone de distribution centrale (6.1) dans des zones distributives (6.2),
- on envoie ledit fluide depuis lesdites zones distributives (6.2) dans lesdits espaces internes creux (6.3), délimités par des parois (lesdits espaces ayant une forme sensiblement parallélépipèdique, chaque espace (6.3) comportant alors deux faces larges parallèles délimitant un plan disposé radialement par rapport à l'axe de la zone de réaction (1) et quatre faces minces, deux d'entre elles étant parallèles à l'axe de la zone de réaction (1), les deux autres étant perpendiculaires à cet axe), par leur face mince supérieure perpendiculaire à l'axe de la zone de réaction (1),
- on fait circuler ledit fluide à l'intérieur desdits espaces internes creux (6.3) sous la forme d'une nappe,
- on évacue ledit fluide caloporteur desdits espaces internes creux (6.3), par leur face mince inférieure perpendiculaire à l'axe de la zone de réaction (1), dans des zones collectrices (6.4) qui sont reliées à une zone de collecte centrale (6.5) par laquelle on soutire ensuite ledit fluide.

Le dispositif d'échange thermique utilisé dans le deuxième type de circulation du fluide caloporteur renferme (voir figures 4, 4A, 4B) :
a) au moins un collecteur distributeur central (6.1a), par exemple vertical, dont l'axe correspond en général à l'axe de l'enceinte, qui est situé dans la partie supérieure de l'enceinte et est connecté à la conduite 2,
b) une pluralité de collecteurs distributeurs (6.2a), parallèles à l'axe de l'enceinte, ces collecteurs étant connectés individuellement, vers leur sommet, au collecteur distributeur central (6.1a),
c) au moins un collecteur receveur central (6.5a), par exemple vertical, dont l'axe correspond généralement à l'axe de l'enceinte, qui est situé dans la partie inférieure de l'enceinte et est connecté à la conduite 3,
d) une pluralité de collecteurs receveurs (6.4a), parallèles à l'axe de l'enceinte, ces collecteurs étant, d'une part, connectés individuellement, vers leur base, au collecteur receveur central (6.5a) et, d'autre part, situés chacun dans le prolongement d'un collecteur distributeur (6.2a) correspondant, la surface de contact entre un collecteur receveur (6.4a) et son collecteur distributeur (6.2a) correspondant étant étanche,
e) une pluralité de collecteurs relieurs (6.6a), chacun d'eux étant, d'une part, parallèle à l'axe de l'enceinte, à un collecteur distributeur (6.2a) et au collecteur receveur (6.4a) correspondant, et, d'autre part, situé dans le même plan défini par ce collecteur distributeur (6.2a), ce collecteur receveur (6.4a) et l'axe de l'enceinte,
f) une pluralité de plaques creuses (espaces internes creux), continues (6.3a) et allongées, destinées à la circulation du fluide de thermorégulation, chaque plaque étant divisée, dans le sens de la largeur, en deux demi-panneaux creux ou demi-espaces internes creux (6.3, 1a et 6.3, 2a), la surface de contact entre ces deux demi-panneaux étant étanche, ces deux demi-panneaux étant ouverts sur un collecteur relieur (6.6a) qui fait communiquer entre eux les deux demi-panneaux (6.3, 1a et 6.3, 2a), le demi-panneau supérieur ou demi-espace supérieur (6.3, 1a) étant ouvert sur un collecteur distributeur (6.2a), le demi-panneau inférieur ou demi-espace inférieur (6.3, 2a) étant ouvert sur le collecteur receveur (6.4a) correspondant.

Le collecteur distributeur central (6.1a) peut éventuellement se terminer par un anneau circulaire sur lequel viennent se connecter les différents collecteurs distributeurs (6.2a). Les différents collecteurs receveurs (6.4a) peuvent également être connectés à un anneau circulaire par lequel se terminerait le collecteur receveur central (6.5a).

Selon une variante de l'invention, les faces des plaques creuses peuvent être constituées par des tôles ondulées dont les ondulations ont au choix l'une des formes suivantes : carrée, rectangulaire, triangulaire, sinusoïdale et en chevrons (voir figure 5D), le but étant de créer une forte turbulence sur l'écoulement du fluide caloporteur.
Lesdites plaques creuses sont sensiblement parallélépipèdiques (6.3a), chaque plaque comportant deux faces larges parallèles délimitant un plan disposé radialement par rapport à l'axe de l'enceinte (1) et quatre faces minces, deux d'entre elles étant parallèles à l'axe de l'enceinte, les deux autres étant perpendiculaires à cet axe ; chaque plaque est divisée, dans le sens de la largeur, en deux demi-panneaux creux ou demi-espaces internes creux (6.3,1a et 6.3,2a), la surface de contact entre ces deux demi-panneaux étant étanche. Ces deux demi-panneaux sont ouverts, sur toute leur face mince parallèle à l'axe de l'enceinte et la plus éloignée de cet axe, sur un collecteur relieur (6.6a) qui fait communiquer entre eux les deux demi-panneaux (6.3,1a et 6.3,2a). Le demi-panneau supérieur ou demi-espace supérieur (6.3 1a) s'ouvre, sur toute sa face mince parallèle à l'axe de l'enceinte et la plus proche de cet axe, sur un collecteur distributeur (6.2a), le demi-panneau inférieur ou demi-espace inférieur (6.3,2a) étant ouvert, sur toute sa face mince parallèle à l'axe de l'enceinte et la plus proche de cet axe, sur le collecteur receveur (6.4a) correspondant. Lesdites faces minces de chaque plaque creuse peuvent éventuellement être non planes, mais par exemple semi-cylindriques.

Ces plaques ou espaces internes creux sont plongés complètement dans l'anneau catalytique.

Dans les figures 4,4A,4B, données à titre d'exemples, on décrira le trajet des réactifs dans la zone de réaction (1) et du fluide caloporteur à travers des plaques creuses ou espaces internes creux sensiblement parallélépidèdiques.

Les réactifs suivent le même cheminement que celui décrit pour les figures 3,3A,3B. En ce qui concerne le fluide caloporteur :
- on envoie ledit fluide dans une zone de distribution centrale (6.1a),
- on répartit ce fluide en provenance de la zone de distribution centrale (6.1a) dans des zones distributives (6.2a),
- on fait pénétrer ce fluide, depuis lesdites zones distributives (6.2a), dans lesdits demi-espaces internes creux supérieurs (6.3,1a) délimités par des parois, chaque demi-espace supérieur (6.3,1a) ayant sensiblement une forme parallélépipèdique (chaque demi-espace supérieur comportant ainsi deux faces larges parallèles délimitant un plan disposé radialement par rapport à l'axe de la zone de réaction (1) et quatre faces minces, deux d'entre elles étant parallèles à l'axe de la zone de réaction (1), les deux autres étant perpendiculaires à cet axe), ledit fluide pénétrant dans lesdits demi-espaces supérieurs (6.3,1a) par leur face mince parallèle à l'axe de la zone de réaction définie par une enceinte (1) de forme sensiblement cylindrique et de section sensiblement circulaire, cette face étant la plus proche de cet axe,
- on fait circuler ledit fluide à l'intérieur desdits demi-espaces internes creux supérieurs (6.3,1a) sous la forme d'une nappe,
- on évacue ledit fluide desdits demi-espaces supérieurs (6.3,1a), par leur face mince parallèle à l'axe de la zone de réaction (1) et la plus éloignée de cet axe, dans des zones relieuses (6.6a) qui relient chacune un demi-espace supérieur (6.3,1a) avec un demi-espace interne creux inférieur (6.3,2a) situé dans le prolongement dudit demi-espace supérieur (6.3,1a), chaque demi-espace inférieur (6.3,2a) étant délimité par des parois et ayant sensiblement une forme parallélépipèdique qui est définie comme pour un demi-espace supérieur (6.3,1a),
- on fait pénétrer ledit fluide, depuis lesdites zones relieuses (6.6a), dans lesdits demi-espaces internes creux inférieurs (6.3,2a) par leur face mince parallèle à l'axe de la zone de réaction (1) et la plus éloignée de cet axe,
- on fait circuler ledit fluide à l'intérieur desdits demi-espaces internes creux inférieurs (6.3,2a) sous la forme d'une nappe,
- on évacue ledit fluide caloporteur desdits demi-espaces inférieurs (6.3,2a), par leur face mince parallèle à l'axe de la zone de réaction (1) et la plus proche de cet axe, dans des zones collectrices (6.4a) qui sont reliées à une zone de collecte centrale (6.5a) par laquelle on soutire ensuite ledit fluide.

Selon une variante de l'invention, lesdites plaques creuses peuvent, éventuellement, avoir des largeurs différentes, ce qui permet de maintenir un rapport minimum entre le volume de l'enceinte et la surface d'échange, tout en évitant d'avoir une trop grande distance entre un point quelconque de l'enceinte et la plaque la plus proche.

Il faut noter qu'on peut aménager dans des plaques creuses sensiblement parallélépipèdiques (voir figures 5A, 5B et 5C) des canaux adjacents au moyen de tôles ondulées (7a, 7b et 7c), les sections desdits canaux ayant au choix l'une des formes suivantes : carrée, rectangulaire (5A), triangulaire (5B) et sinusoïdale (5C), ces canaux reliant entre elles les deux faces minces parallèles à l'axe de l'enceinte d'une même plaque : d'une part, la présence de ces canaux adjacents assure la solidité des plaques creuses qui peuvent atteindre et dépasser, par exemple, dix mètres de hauteur et d'autre part, elle évite la formation de zones mortes (c'est-à-dire de zones non traversées par le fluide caloporteur), zones mortes qui pourraient se former du fait de l'écoulement en nappe du fluide caloporteur à l'intérieur des plaques.

L'assemblage des tôles peut être réalisé soit par soudure, soit beaucoup plus économiquement par brasure, soit par points, soit par immersion dans un bain, ou toute autre technique adéquate.

Les tôles éventuellement utilisées dans les divers modes de réalisation de l'invention ont, généralement, moins de 10 millimètres d'épaisseur, de préférence moins de 3 millimètres d'épaisseur.

Sur les figures, l'enceinte (1) est représentée en position sensiblement verticale : les circulations du fluide de thermorégulation et de la charge peuvent se faire de haut en bas comme décrit précédemment, mais également de bas et haut (et donc aussi à contrecourant). De même, l'enceinte peut être utilisée en position sensiblement inclinée ou en position sensiblement horizontale : c'est par exemple le cas où l'enceinte étant très longue, il y a une différence sensible de la pression statique entre le haut et le bas de l'enceinte.

L'invention est illustrée par les exemples suivants :

### Exemple 1 (comparatif)

Dans une unité de réformage catalytique industrielle fonctionnant selon le modèle classique à 4 réacteurs adiabatiques à lits mobiles, on envoie une charge renfermant un mélange de naphta de pétrole brut d'une part et de naphta de craquage-cokéfaction thermique d'autre part.

La charge d'hydrocarbures ainsi formée a la compositon suivante (en volume) :

| | |
|---|---|
| - paraffines | 55,3 % |
| - naphtènes | 38,7 % |
| - aromatiques | 6,0 % |

Cette charge est mélangée avec un gaz de recyclage à 84 % d'hydrogène de façon à former un mélange réactionnel dont le rapport molaire hydrogène sur naphta est égal à 4 environ.

Le réactif ainsi obtenu est dirigé sur le système réactionnel contenant un catalyseur supporté par de l'alumine (de surface spécifique 220 m²/g et de volume poreux 0,57 cm³/g) et à base de platine, de chlore et de rhénium (en poids : 0,35 % Pt ; 0,25 % Re ; 1,12 % Cl).

Le débit massique horaire de la charge de naphta est égal à environ 3,2 fois la masse de catalyseur présent dans le système réactionnel (dans l'ensemble des 4 réacteurs).

La pression à l'entrée du premier réacteur est maintenue à 1,2 MPa et on constate que la pression en sortie du dernier réacteur est égale à 0,93 MPa, soit une chute de 0,27 MPa à travers le système réactionnel.

Les températures à l'entrée des 4 réacteurs sont ajustées à 502 °C grâce au contrôle des fours de préchauffe et de réchauffage.

En sortie de chaque réacteur, on note les températures suivantes :

| | |
|---|---|
| 1er réacteur | 417 °C |
| 2ème réacteur | 436 °C |
| 3ème réacteur | 468 °C |
| 4ème réacteur | 492 °C |

On obtient, en limite d'unité, un réformat à 98 NOR (nombre d'octane de recherche) avec les rendements suivants (% poids par rapport à la charge) :

| | |
|---|---|
| . H₂ | 2,8 % |
| . C₁₋₂ | 3,5 % |
| . C₃₋₄ | 7,9 % |
| . Réformat (C₅+) | 85,8 % |

### Exemple 2

Dans une unité semi-industrielle de réformage catalytique dont le schéma correspond à celui de la figure 1, on dispose d'un réacteur à lit mobile, équipé d'un système de plaques chauffantes réalisé selon les figures 4 et 5C, et rempli du même catalyseur que celui utilisé dans l'unité industrielle précédente.

Les plaques chauffantes sont parcourues intérieurement par un débit de caloporteur à base de plomb et de bismuth.

Le caloporteur entre dans les plaques à 515 °C et en sort à 505 °C.

On injecte la même charge (naphta) que précédemment et on règle l'unité de façon à obtenir une pression en sortie de 0,53 MPa et une température d'entrée et de sortie de réacteur de 502 °C.

On recycle le gaz dans le rapport molaire H₂/charge de 4 et on réajuste le débit massique horaire de la charge de telle façon à obtenir un réformat de 98 NOR.

A ce moment, on note que :
- le rapport entre le débit massique horaire de la charge et la masse du catalyseur contenu dans le réacteur est égal à 3,5 au lieu de 3,2 lors de la marche en adiabatique (exemple 1) ;
- la pression à l'entrée du réacteur est égale à 0,56 MPa contre 0,93 à 1,2 MPa à l'entrée des réacteur adiabatiques (exemple 1).
- la température des réactifs, bien qu'égale à 502 °C à l'entrée et à la sortie, connaît cependant un minimum à 450 °C au sein du réacteur ;
- les rendements s'établissent de la manière suivante (% poids par rapport à la charge) :

| | |
|---|---|
| . H₂ | 3,1 % |
| . C₁₋₂ | 2,6 % |
| . C₃₋₄ | 5,8 % |
| . Réformat (C₅+) | 88,5 % |

Grâce à la marche basse pression que permet ce système réactionnel isotherme, on a gagné 2,7 points sur le rendement en réformat.

Si on remplace le lit mobile par un lit fixe (les autres équipements et les conditions opératoires restant les mêmes), on obtient les rendements suivants (% poids par rapport à la charge) :

| | |
|---|---|
| . H₂ | 3,1 % |
| . C₁₋₂ | 2,7 % |
| . C₃₋₄ | 5,9 % |
| . Réformat (C₅+) | 88,3 % |

### Exemple 3

On dispose de deux réacteurs à lit mobile dans lesquels on répartit le catalyseur (identique à celui de l'exemple 1) dans un rapport 50/50.

Le premier réacteur est équipé d'un système de plaques chauffantes réalisé selon les figures 4 et 5C, le deuxième réacteur est adiabatique (sans dispositif d'échange thermique).

Le fluide caloporteur est le même que celui employé précédemment.

Les mêmes conditions opératoires que celles de l'exemple 2 étant respectées, on note que :
- le débit massique horaire de la charge est égal à 3,7 fois la masse de catalyseur contenu dans l'ensemble du système réactionnel (c'est-à-dire les deux réacteurs) ;
- la pression d'entrée est remontée à 0,59 MPa au lieu de 0,56 MPa dans la marche précédente (exemple 2) ;
- dans le premier réacteur, les températures d'entrée et de sortie sont les mêmes et égales à 502 °C, mais le minimum au sein du lit catalytique est remonté de 450 °C (exemple 2) à 480 °C ;
- dans le second réacteur, les produits entrés à 502 °C en sortent à 492 °C ;
- les rendements (en % poids par rapport à la charge) n'ont pas varié sensiblement par rapport à ceux de l'exemple 2 (celui en réformat a très légèrement augmenté) :

| | |
|---|---|
| . H₂ | 3,2 % |
| . C₁₋₂ | 2,5 % |
| . C₃₋₄ | 5,6 % |
| . Réformat (C₅+) | 88,7 % |

### Exemple 4

On dispose de deux réacteurs isothermes, c'est-à-dire équipés chacun d'un système de plaques chauffantes réalisé selon les figures 4 et 5C, ces réacteurs étant à lit mobile (avec un catalyseur identique à celui des exemples précédents et réparti dans un rapport 50/50).

Après réglage aux mêmes conditions opératoires qu'à l'exemple 3, les différences notables (par rapport à l'exemple 3) se situent au niveau de la température de sortie du second réacteur qui est remontée à 502 °C et du débit massique horaire traité qui est passé de 3,7 à 3,8 fois la masse de catalyseur contenu dans l'ensemble du système réactionnel. Enfin, les rendements (en % poids par rapport à la charge) sont les suivants :

| | |
|---|---|
| . H₂ | 3,3 % |
| . C₁₋₂ | 2,4 % |
| . C₃₋₄ | 5,4 % |
| . Réformat (C₅+) | 88,9 % |

## Revendications

1. Procédé de réformage catalytique dans lequel on fait circuler une charge d'hydrocarbures, dans des conditions de réformage en présence d'hydrogène, à travers une zone de réaction définie par une enceinte de forme sensiblement cylindrique, ladite zone renfermant un lit de catalyseur qui a la forme d'un anneau délimité par deux parois cylindriques coaxiales, dans lequel est entièrement plongé un échangeur de chaleur dans lequel circule un fluide caloporteur, la charge traversant ledit lit sensiblement perpendiculairement à l'axe longitudinal de la zone de réaction à partir d'un conduit central, procédé caractérisé en ce que le lit de catalyseur est divisé en secteurs par des espaces internes creux délimités par des parois et ayant une forme sensiblement parallélépipédique sensiblement parallèle à l'axe du lit, le fluide caloporteur circulant dans lesdits espaces internes creux, que lesdites parois sont limitées radialement par lesdites deux parois cylindriques coaxiales et que, la pression dans la zone de réaction est comprise entre 0,1 et 0,9 MPa.

2. Procédé selon la revendication 1 dans lequel le lit de catalyseur est mobile.

3. Procédé de réformage catalytique dans lequel on fait circuler une charge d'hydrocarbures, dans des conditions de réformage en présence d'hydrogène, successivement à travers deux zones de réaction définies chacune par une enceinte de forme sensiblement cylindrique, dans lesquelles la pression est comprise entre 0,1 et 0,9 MPa, la première zone de réaction renfermant un lit de catalyseur qui a la forme, d'un anneau délimité par deux parois cylindriques coaxiales, divisé en secteurs par une pluralité d'espaces internes creux, délimités par des parois et de forme sensiblement parallélépipédique et sensiblement parallèle à l'axe du lit, dans lesquels circule un fluide caloporteur, la charge traversant ledit lit sensiblement perpendiculairement à l'axe longitudinal de cette première zone de réaction, la seconde zone de réaction renfermant un lit mobile de catalyseur qui a la forme d'un anneau délimité par deux parois cylindriques coaxiales, l'effluent réactionnel en provenance de la première zone de réaction traversant ledit lit sensiblement perpendiculairement à l'axe longitudinal de cette seconde zone de réaction.

4. Procédé selon la revendication 3 dans lequel le lit de catalyseur de la seconde zone de réaction est divisé en secteurs par une pluralité d'espaces internes creux, délimités par des parois et de forme sensiblement parallélépipédique et sensiblement parallèle à l'axe du lit, dans lesquels circule un fluide caloporteur.

5. Procédé selon l'une des revendications 3 et 4 dans lequel le lit de catalyseur de la première zone est mobile.

6. Procédé selon l'une des revendications 1 à 5 dans lequel, à l'intérieur d'au moins une zone de réaction contenant des espaces internes creux :
- on envoie le fluide caloporteur dans une zone de distribution centrale dans des zones distributives.
- on répartit ce fluide en provenance de la zone de distribution centrale dans des zones distributives,
- on envoie ledit fluide depuis lesdites zones distributives dans lesdits espaces internes creux, chaque espace interne creux ayant une forme sensiblement parallélépipèdique, ledit fluide pénétrant dans lesdits espaces internes creux par leur face mince supérieure perpendiculaire à l'axe de la zone de réaction,
- on fait circuler ledit fluide à l'intérieur desdits espaces internes creux sous la forme d'une nappe,
- on évacue ledit fluide caloporteur desdits espaces internes creux, par leur face mince inférieure perpendiculaire à l'axe de la zone de réaction, dans des zones collectrices qui sont reliées à une zone de collecte centrale par laquelle on soutire ensuite ledit fluide.

7. Procédé selon l'une des revendications 1 à 5 dans lequel, à l'intérieur d'au moins une zone de réaction contenant des espaces internes creux, d'une part, chacun desdits espaces internes creux est divisé dans le sens de la largeur en un demi-espace interne creux supérieur et un demi-espace interne creux inférieur et d'autre part :
- on envoie le fluide caloporteur dans une zone de distribution centrale,
- on répartit ce fluide en provenance de la zone de distribution centrale dans des zones distributives,
- on fait pénétrer ledit fluide, depuis lesdites zones distributives, dans lesdits demi-espaces internes creux supérieurs délimités par des parois, chaque demi-espace interne creux supérieur ayant une forme sensiblement parallélépipèdique, ledit fluide pénétrant dans ces demi-espaces internes creux supérieurs par leur face mince parallèle à l'axe de la zone de réaction et la plus proche de cet axe,
- on fait circuler ledit fluide à l'intérieur desdits demi-espaces internes creux supérieurs sous la forme d'une nappe,
- on évacue ledit fluide desdits demi-espaces internes creux supérieurs, par leur face mince parallèle à l'axe de la zone de réaction et la plus éloignée de cet axe, dans des zones relieuses qui relient chacune un demi-espace interne creux supérieur avec un demi-espace creux inférieur situé dans le prolongement dudit demi-espace interne creux supérieur, chaque demi-espace interne creux étant délimité par des parois et ayant une forme sensiblement parallélépipèdique,
- on fait pénétrer ledit fluide, depuis lesdites zones relieuses, dans lesdits demi-espaces internes creux inférieurs par leur face mince parallèle à l'axe de la zone de réaction et la plus éloignée de cet axe,
- on fait circuler ledit fluide à l'intérieur desdits demi-espaces internes creux inférieurs sous la forme d'une nappe,
- on évacue ledit fluide caloporteur desdits demi-espaces internes creux inférieurs, par leur face mince parallèle à l'axe de la zone de réaction et la plus proche de cet axe, dans des zones collectrices qui sont reliées à une zone de collecte centrale par laquelle on soutire ensuite ledit fluide.

## Claims

1. A catalytic reforming method wherein a hydrocarbon charge is caused to flow under reforming conditions in the presence of hydrogen through a reaction zone defined by a substantially cylindrical shaped enclosure, the said zone containing a bed of catalyst which is in the form of a ring defined by two coaxial cylindrical walls in which there is entirely immersed a heat exchanger through which a heat-carrying fluid flows, the charge passing through the said bed substantially at right-angles to the longitudinal axis of the reaction zone from a central pipe, the said method being characterised in that the bed of catalyst is divided into sectors by hollow internal spaces defined by walls and having a substantially parallelepiped shape, substantially parallel with the axis of the bed, the heat-carrying fluid circulating within the said hollow internal spaces and in that the said walls are bounded radially by the said two coaxial cylindrical walls and in that the pressure in the reaction zone is comprised between 0.1 and 0.9 MPa.

2. A method according to claim 1 in which the catalyst bed is mobile.

3. A catalytic reforming method wherein a hydrocarbon charge is caused to flow under reforming conditions in the presence of hydrogen successively through two reaction zones each defined by a substantially cylindrical shaped enclosure in which the pressure is comprised between 0.1 and 0.9 MPa, the first reaction zone containing a bed of catalyst which is in the form of a ring defined by two coaxial cylindrical walls, divided into sectors by a plurality of hollow internal spaces, bounded by walls and of substantially parallelepiped form and substantially parallel with the axis of the bed, in which a heat-carrying fluid flows, the charge passing through the said bed substantially at right-angles to the longitudinal axis of this first reaction zone, the second reaction zone containing a mobile catalyst bed which is in the form of a ring defined by two coaxial cylindrical walls, the reaction effluent emanating from the first reaction zone passing through the said bed substantially at right-angles to the longitudinal axis of this second reaction zone.

4. A method according to claim 3 in which the catalyst bed of the second reaction zone is divided into sectors by a plurality of hollow internal spaces defined by walls and of substantially parallelepiped form and substantially parallel with the axis of the bed, and through which a heat-carrying fluid flows.

5. A method according to one of claims 3 and 4 in which the catalyst bed of the first zone is mobile.

6. A method according to one of claims 1 to 5 in which, inside at least one reaction zone containing hollow internal spaces:
- the heat-carrying fluid is fed into a distributing zone in the centre of the distributing zones;
- the said fluid emanating from the central distributing zone is divided up among distributing zones;
- the said fluid is fed from the said distributing zones into the said hollow internal spaces, each hollow internal space being substantially parallelepiped in shape, the said fluid entering the said hollow internal spaces through their thin upper face at right-angles to the axis of the reaction zone;
- the said fluid is caused to flow inside the said hollow internal spaces in the form of a sheet;
- the said heat-carrying fluid is discharged from the said hollow internal spaces through their thin lower face at right-angles to the axis of the reaction zone, into collecting zones which are connected to a central collecting zone from which the said fluid is then drawn off.

7. A method according to one of claims 1 to 5 in which, inside at least one reaction zone containing hollow internal spaces, on the one hand, each of the said hollow internal spaces is divided in the direction of its width into an upper hollow internal semi-space and a lower hollow internal semi-space and, on the other hand:
- the heat-carrying fluid is fed into a central distributing zone;
- this fluid emanating from the central distributing zone is divided up over the distributing zones;
- the said fluid from the said distributing zones is caused to enter the said upper hollow internal semi-spaces defined by walls, each upper hollow internal semi-space being of substantially parallelepiped shape, the said fluid entering these upper hollow internal semi-spaces through their thin face parallel with the axis of the reaction zone and the closest to this axis;
- the said fluid is caused to circulate inside the said upper hollow internal semi-spaces in the form of a sheet;
- the said fluid is drawn off from the upper hollow internal semi-spaces through their thin face parallel with the axis of the reaction zone and the farthest removed from this axis, into connecting zones which each connect an upper hollow internal semi-space to a lower hollow semi-space situated as an extension of the said upper hollow internal semi-space, each hollow internal semi-space being bounded by walls and being of substantially parallelepiped shape;
- the said fluid from the said connecting zones is caused to enter the said lower hollow internal semi-spaces through their thin face parallel with the axis of the reaction zone and the farthest removed from this axis;
- the said fluid is caused to circulate inside the said lower hollow internal semi-spaces in the form of a sheet;
- the said heat-carrying fluid is drawn off from the said lower hollow internal semi-spaces through their thin face parallel with the axis of the reaction zone and the closest to this axis, into collecting zones which are connected to a central collecting zone from which the said fluid is then drawn off.

## Patentansprüche

1. Katalytisches Reformierungsverfahren, bei dem man einen Kohlenwasserstoff-Einsatzstoff unter Reformierungsbedingungen in Gegenwart von Wasserstoff durch eine, durch ein Gehäuse mit etwa zylindrischer Form definierten, Reaktionszone zirkulieren läßt, wobei die besagte Zone ein Katalysatorbett mit der Form eines durch zylindrische koaxiale Wände begrenzten Ringes einschließt, in das ein Wärmeaustauscher, in dem eine Wärmeträgerflüssigkeit zirkuliert, vollständig eingetaucht ist, wobei dar besagte Einsatzstoff das besagte Bett von einer zentralen Leitung aus etwa senkrecht zu der Längsachse der Reaktionszone durchquert, das Verfahren ist dadurch gekennzeichnet, daß das Katalysatorbett durch innere, durch Wände begrenzte, Hohlräume mit etwa parallelepipedischer, etwa zur Achse des Bettes paralleler Form in Abschnitte unterteilt ist, und die Wärmeträgerflüssigkeit in diesen inneren Hohlräumen zirkuliert, und daß die besagten Wände radial durch die besagten zwei zylindrischen, koaxialen Wände begrenzt sind, und daß der Druck in der Reaktionszone zwischen einschließlich 0,1 und 0,9 MPa liegt.

2. Verfahren nach Anspruch 1, bei dem man das Katalysatorbett beweglich ist.

3. Katalytisches Reformierungsverfahren, bei dem man einem Kohlenwasserstoff-Einsatzstoff unter Reformierungsbedingungen in Gegenwart von Wasserstoff nacheinander durch zwei Reaktionszonen zirkulieren läßt, von denen jede durch ein Gehäuse mit etwa zylindrischer Form definiert ist, in denen der Druck zwischen einschließlich 0,1 und 0,9 MPa liegt, wobei die erste Reaktionszone ein Katalysatorbett in Form eines durch zwei zylindrische, koaxiale Wände begrenzten Ringes umfaßt, das durch eine Vielzahl innere, durch Wände begrenzte, Hohlräume mit etwa parallelepipedischer, etwa zur Achse des Bettes paralleler Form in Abschnitte unterteilt ist, in denen eine Wärmeträgerflüssigkeit zirkuliert und der Einsatzstoff das besagte Bett etwa senkrecht zur Längsachse dieser ersten Reaktionszone durchquert, die zweite Reaktionszone umfaßt ein bewegliches Katalysatorbett in Form eines durch zwei zylindrische, koaxiale Wände begrenzten Ringes, wobei der Reaktionsaustragsstoff aus der ersten Reaktionszone das besagte Bett etwa senkrecht zur Längsachse dieser zweiten Reaktionszone durchquert.

4. Verfahren nach Anspruch 3, bei dem das Katalysatorbett der zweiten Reaktionszone durch eine Vielzahl innerer, durch Wände begrenzter, Hohlräume mit etwa parallelepipedischer und zur Achse des Bettes etwa paralleler Form in Abschnitte unterteilt wird, durch die eine Wärmeträgerflüssigkeit zirkuliert.

5. Verfahren nach einem der Ansprüche 3 und 4, bei dem das Katalysatorbett der ersten Reaktionszone beweglich ist.

6. Verfahren nach einem der Ansprüche 1 bis 5, bei dem im Inneren von mindestens einer innerer Hohlräume enthaltenden Reaktionszone:
- die Wärmeträgerflüssigkeit über eine zentrale Verteilerzone in Verteilungszonen geschickt wird,
- diese aus der zentralen Verteilungszone stammende Flüssigkeit in die Verteilerzonen aufgeteilt wird,
- die besagte Flüssigkeit aus den besagten Verteilerzone in die besagten inneren Hohlräume geschickt wird, wobei jeder innere Hohlraum etwa parallelepipedische Form besitzt und die besagte Flüssigkeit durch deren kleine obere, senkrecht zur Achse der Reaktionszone stehende Fläche in die inneren Hohlräume eindringt,
- man die besagte Flüssigkeit im Inneren der besagten inneren Hohlräume schalenartig zirkulieren läßt,
- die besagte Trägerflüssigkeit aus den besagten inneren Hohlräumen durch deren kleine untere, senkrecht zur Achse der Reaktionszone stehende, Fläche in Sammlerzonen abgezogen wird, die mit einer zentralen Sammlerzone verbunden sind, durch die die besagte Flüssigkeit anschließend abgezogen wird.

7. Verfahren nach einem der Ansprüche 1 bis 5, bei dem im Inneren von mindestens einer innerer Hohlräume enthaltender Reaktionszone einerseits jeder der besagten inneren Hohlräume der Länge nach in einen oberen inneren Halb-Hohlraum und einen unteren inneren Halb-Hohlraum unterteilt ist und andererseits:
- die Wärmeträgerflüssigkeit in eine zentrale Verteilerzone geschickt wird,
- diese aus der zentralen Verteilungszone stammende Flüssigkeit in Verteilerzonen aufgeteilt wird,
- die besagte Flüssigkeit aus den besagten Verteilerzonen in die besagten oberen inneren, durch Wände begrenzten Halb-Hohlräume geschickt wird, wobei jeder obere innere Halb-Hohlraum etwa parallelepipedische Form besitzt und die besagte Flüssigkeit durch deren kleine obere, parallel zur Achse der Reaktionszone und dieser Achse am nächsten stehende Fläche in diese oberen inneren Halb-Hohlräume eindringt,
- man die besagte Flüssigkeit im Inneren der besagten inneren Hohlräume schalenartig zirkulieren läßt,
- die besagte Flüssigkeit aus den besagten oberen inneren Halb-Hohlräumen durch deren kleine untere, parallel zur Achse der Reaktionszone und von dieser Achse am weitesten entfernt stehende Fläche in Verbindungszonen abgezogen wird, von denen jede einen oberen inneren Halb-Hohlraum mit einem unteren inneren Halb-Hohlraum verbindet, und die in der Verlängerung des besagten oberen inneren Halb-Hohlraumes liegen, wobei jeder innere Halb-Hohlraum durch Wände begrenzt ist und etwa parallelepipedische Form hat,
- man die besagte Flüssigkeit aus den besagten Verbindungszonen in die besagten unteren inneren Halb-Hohlräume durch deren kleine, parallel zur Achse der Reaktionszone und von dieser Achse am weitesten entfernt stehenden Fläche eindringen läßt,
- man die besagte Flüssigkeit im Inneren der besagten unteren inneren Hohlräume schalenartig zirkulieren läßt,
- die besagte Trägerflüssigkeit aus den besagten unteren inneren Hohlräumen durch deren kleine, parallel zur Achse der Reaktionszone und dieser Achse am nächsten stehende Fläche in Sammlerzonen abgezogen wird, die mit einer zentralen Sammlerzone verbunden sind, durch die die besagte Flüssigkeit anschließend abgezogen wird.
